# EUROPEAN PATENT APPLICATION

(11) **EP 1 327 989 A2**
(43) Date of publication of application: **16.07.2003**
(21) Application number: 03250093.6
(22) Date of filing: 08.01.2003
(51) Int. Cl.: G11B 33/04

(54) **Disc storage package**

(30) Priority: 11.01.2002 US 347634 P
(71) Applicant: Hub Folding Box Company, Inc., Mansfield, Massachusetts 02048 (US)
(72) Inventor: O'Brien, Patrick, York 03909 Main (US); Brandow, Bryon, Narwick 01760 Massachusetts (US); Imperatore, Michael, South Easton 02375 Massachusetts (US)
(74) Representative: Hitchcock, Esmond Antony

(57) **Abstract**

A storage package for recording media (especially CD's) includes a fastener with a central member that is attached to a packaging panel. The fastener also includes a flexible planar member positioned on the side of the recording medium opposite the packaging panel and connected to the central member, so that the recording medium remains attached to the panel. The flexible planar member need not be attached to the recording medium, but its diameter is greater than the central aperture so that the fastener cannot easily (or accidentally) extend through the aperture to release the recording medium from the packaging panel. Alternatively, the flexible planar member is attached to the recording medium, so that the fastener forms a direct connection between the packaging panel and the recording medium.

## Description

This invention relates to packaging for objects with a central opening, particularly flat discs used as recording media.

Typically flat recording media such as music or video discs have a central opening. Such media may be packaged in single use packages for mailing, point-of-sale display or other functions. Disc packaging should hold the disc securely in place, yet allow the user to remove it. The packaging should be easy to mass produce at relatively low cost.

U.S. Patent 5,332,089 discloses a compact disc storage package that includes a holder formed of an easily but resiliently compressible material, configured and dimensioned to extend snugly through the disc's central aperture. In that way, the holder retains the recording medium until the recording medium is forcibly removed.

Other prior art CD packages include those disclosed in U.S. 5,205,405; U.S. 5,219,417, and U.S. 5,788,068.

The present invention is directed at a storage package for recording media (especially CD's) that meets several needs. The package includes a fastener The fastener has an outer (generally flexible and planar) member positioned on the side of the recording medium opposite the packaging panel with a central member that is attached to a packaging panel and extends through the central aperture of the recording medium, connecting the panel to the outer member in order to keep the recording medium associated with the panel.

In one embodiment, the outer member is not attached to the recording medium, but its dimension (e.g., diameter) is greater than the central aperture so that the fastener cannot easily (or accidentally) extend through the aperture to release the recording medium from the packaging panel. In another embodiment, the outer member is attached to the recording medium, so that the fastener forms a direct connection between the packaging panel and the recording medium.

One particular embodiment features a fastener that is an injection moulded (e.g., as a single piece or part) fastening cap which comprises the central member and the outer member. The central member may include a top surface with an embossed or moulded design. The outer member may include a positioning key for orientation.

The panel may be a fold-out/pop-up panel contained within a folding package. When the package is unfolded, the panel pops up to display, and provide easy access to, the recording medium.

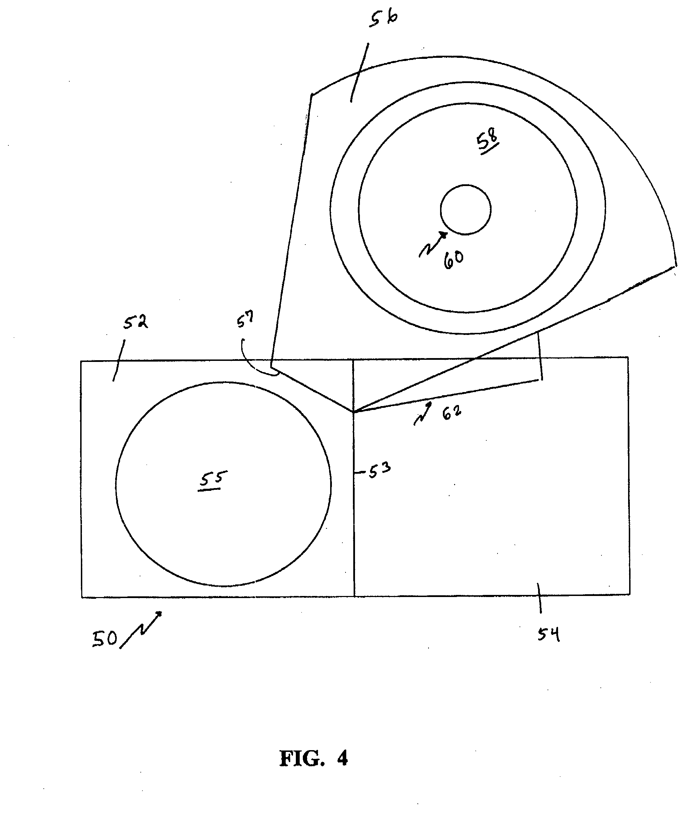

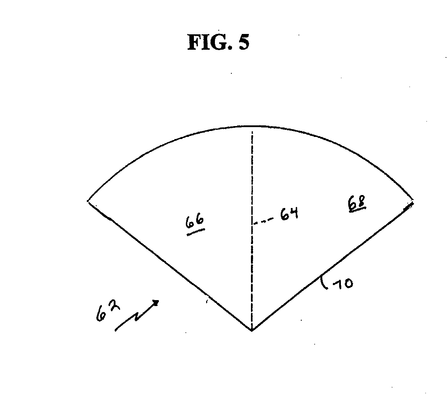

Various features, objects, and advantages of the invention will be apparent from the following description of embodiments thereof, in which reference will be made to the accompanying drawings wherein:
FIG. 1 is a view of a general embodiment of the invention.
FIGS. 2A-2D are four views of one specific embodiment of a fastener that can be used in the invention .
FIGS. 3A-3C are three views of a second specific embodiment of a fastener that can be used in the invention.
FIG. 4 is a view of a pop-out alternative to the general embodiment of FIG. 1.
FIG. 5 is a pop-out member used in the embodiment of FIG. 4.
FIGS. 6A- 6C show an alternative embodiment in which the fastener is an injection moulded disc with a central debossed region.
Like reference symbols in the various drawings indicate like elements.

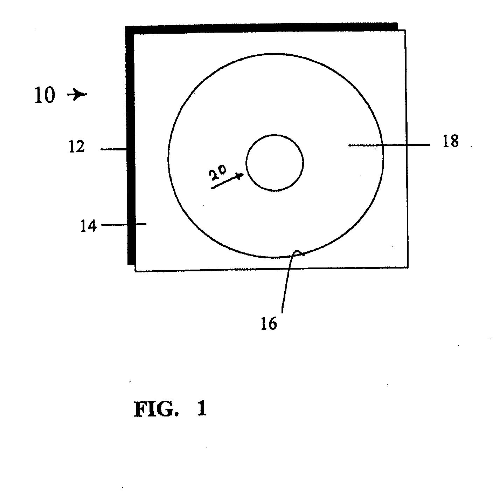

In FIG. 1, the storage package 10 includes a flat paper board back panel 12 and an over-panel 14 with a circular opening 16 to display CD 18 contained within the package. A fastener 20 fixes CD 18 to package 10.

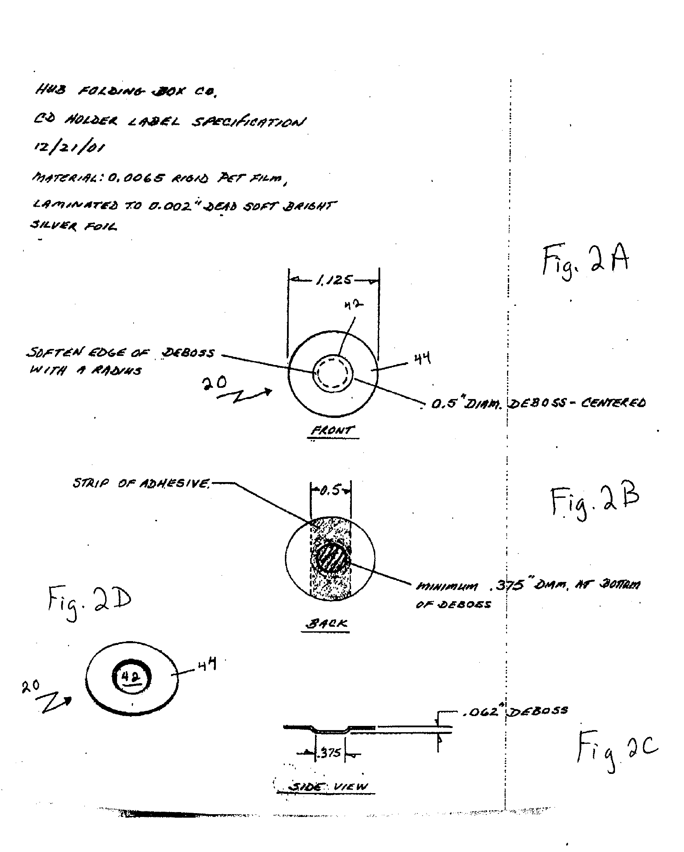

FIGS. 2A-2D disclose one particular embodiment for fastener 20. In those figures, a fastener 20 (best shown in FIG. 2D) is an integral polymeric part having a central member or segment 42 and a planar member 44. FIG 2A is a front view (from the same view as in FIG. 1). FIG. 2B is a back view (from the panel side of fastener 20). FIG 2C is a cross-section of fastener 20. Fastener 20 is an integral part, in effect a disc with a central portion 42 that can be "debossed" (pressed inward) to maintain an operable configuration in which the central member 42 is attached to the packaging panel 12. The back face of planar member 44 is 77 attached directly to the front face of the recording medium 18 around the periphery of its central aperture. The material for this integral fastener is a laminate such as a polyethylene terephthalate (e.g., 0.0065 rigid PET film), laminated to a foil (e.g., 0.002 dead soft bright silver foil). This combination of materials is satisfactory to maintain the planar member 44 is directly attached to the face of CD 38 opposite to panel 32. Planar member 44 has a diameter of about 1.125". The debossed central member 42 is about 0.5" in diameter at the front, and is radiused to about 0.375" at the back. It has a depth of about 0.062". This embodiment is better suited to automation.

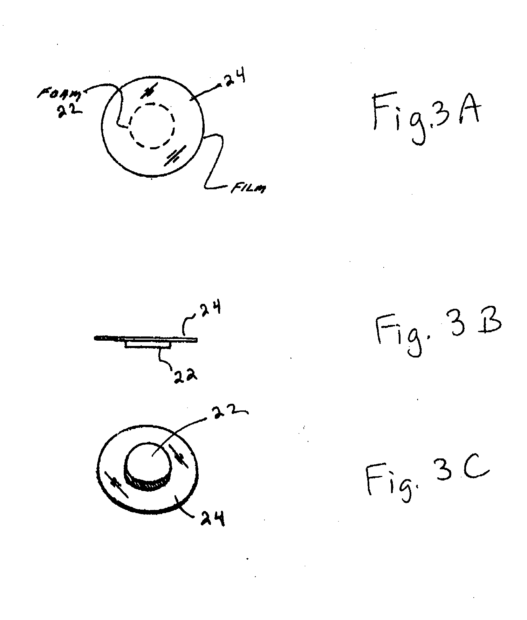

FIGS. 3A-3C disclose a second embodiment for fastener 20, which includes a central member 22 attached at one end to panel 12 and a flexible planar member 24 positioned on the side of CD 18 opposite to panel 12. Central member 22 is a cylindrical piece of foam one face of which is attached to panel 12 and the other face of which is attached to planar member 24. Planar member 24 is substantially larger than the central aperture of CD 18, and member 24 is not attached to CD 18. CD 18 remains fixed to panel 12 because member 24 will not easily (or accidentally) fit through the aperture. In that way, CD 18 will remain in place until the user removes fastener 20 from panel 12 and discards the fastener; alternatively, the user could deform planar member 24 and force it through the aperture in CD 18. Planar member 24 can be any suitable plastic, and preferably will accept printing, e.g. six color graphics. Alternatively, planar member 24 is clear, central member 22 can be heavy chipboard (about 0.050" thick) rather than foam. In that case, printing on central member 22 is visible from the top of the CD.
FIG . 4 is a highly diagrammatic view, not drawn to scale, showing an alternative to the embodiment of FIG. 1 in which the panel to which the CD is attached pops out. Packaging 50 includes a left panel 52 with a central cutout 55 hinged to a right panel 54. Arcuate flap 56 is attached to CD 58 as described above using a fastener 60. Flap 56 is attached at one end 57 to the inside of left panel 52. The back of flap 56 is attached to a hinged pop-out member 62, illustrated in FIG. 5. Specifically, pop-out member 62 includes a medial hinge 64 dividing its left half 66 (which is attached to the back of flap 56) from its right half 68. Edge 70 of right half 68 is fixed to right panel 54. When packaged, hinge 53 is closed so that right panel 52 overlies left panel 54. Hinge 64 is closed, so that flap 56 is positioned between panels 52 and 54, with CD 58 visible through the central cutout 55. When hinge 53 is opened, hinge 64 is also pulled open. As that happens, flap 56 pops out, supported by pop-out member 62, to the open position shown in FIG. 4.

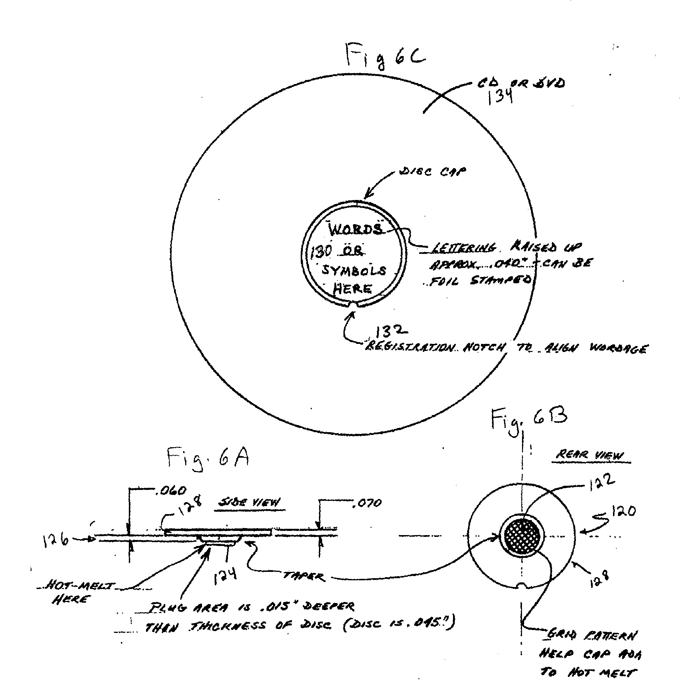

In another embodiment shown in Figs. 6A-6C, the fastener is an injection moulded disc, with a central debossed region that passes through the center hole in the CD. The debossed region is attached to the panel using hot melt glue. FIG 6B is a side view of a one-piece injection moulded plug/cap unit 120 that has a patterned bottom plug face 122 to receive adhesive 124 (e.g. hot melt adhesive). The pattern assists in receiving adhesive. In Fig. 6A, the plug region 126 is thicker than the thickness of the disc being secured in the packaging. For example, for a standard disc 134 in Fig. 6C of about 0.045" thick, the plug is about 0.060" thick. The plug region 126 is tapered, becoming wider as it reaches a flexible cap region. The cap region 128 is wider than the disc hole. The top surface 130 of the cap region is suitable for moulded lettering. A registration notch 132 orients the cap so that the orientation of the lettering on the top of the cap is correct. Alternatively, the top surface of the cap can include foil that is stamped with a design and/or text.

The above described alternative embodiment is assembled by applying hot melt adhesive to face 122 and adhering plug/cap 120 to the board, with CD 134 in place. Application of a design or lettering to face 130 can be accomplished before, during or after assembly. Once the adhesive is in place, CD 134 cannot be removed without deforming cap region 128.

## Claims

1. A storage package containing a flat recording medium with a central aperture, and comprising a panel and fastener holding the recording medium to the panel, the fastener having a central member extending through the central aperture and an outer member, one end of the central member being attached to the panel and the opposite end of the central member being connected to the outer member, with the outer member being larger than the aperture to resist disengagement of the recording medium from the panel .

2. A disc storage package according to Claim 1 wherein the recording medium is a compact disc.

3. A disc storage package according to Claim 1 or Claim 2 wherein the outer member is a polymeric material.

4. A disc storage package according to any preceding Claim wherein the outer member is not attached to the recording medium.

5. A disc storage package according to any preceding Claim wherein the central member is sized to move loosely within the aperture.

6. A disc storage package according to Claim 5 wherein the aperture is generally round and the outer member is also generally round having a diameter larger than the aperture diameter and a stiffness selected so that the outer member does not readily pass through the aperture.

7. A disc storage package according to any of Claims 1 to 3 wherein the outer member is attached to the recording medium.

8. A disc storage package according to any preceding Claim wherein the central member is a polymer foam.

9. A disc storage package according to any preceding Claim wherein the central member is attached by adhesive to the outer member.

10. A disc storage package according to any of Claims 1 to 8 wherein the central member and the outer member are an integral polymeric part.

11. A disc storage package according to any preceding Claim wherein the fastener is an injection moulded fastening cap which comprises the central member and the outer member.

12. A disc storage package according to Claim 11 wherein the fastener is a one-piece injection moulded part.

13. A disc storage package according to any of Claims 10 to 12 wherein the central member is a central segment of the outer member, deformed to extend through the aperture for attachment to the panel.

14. A disc storage package according to any preceding Claim wherein the outer member is generally flexible and planar.

15. A disc storage package according to any preceding Claim wherein the central member includes a top surface with an embossed or moulded design.

16. A disc storage package according to any preceding Claim wherein the outer member includes a positioning key for orientation.

17. A pop-up display device including a storage package according to any preceding Claim, which device comprises hinged faces attached to a display folded between the faces when the faces are closed and which pops up as the hinged faces are opened, the packaging panel of the storage package being attached to the display.
